(19) Europäisches Patentamt
European Patent Office
Office européen des brevets

(11) **EP 1 729 109 A1**

(12) **EUROPEAN PATENT APPLICATION**

(43) Date of publication:
**06.12.2006 Bulletin 2006/49**

(51) Int Cl.:
***G01N 21/01*** *(2006.01)*

(21) Application number: **05011904.9**

(22) Date of filing: **02.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Maurice E. Müller Institut 4056 Basel (CH)**

(72) Inventors:
• **Engel, Andreas, Prof. Dr.**
  **4056 Basel (CH)**
• **Rémigy, Hervé-William Dr.**
  **4056 Basel (CH)**
• **Kaufmann, Thomas Claudio**
  **4056 Basel (CH)**

(54) **Method and equipment for the determination of surfactant concentrations in aqueous solutions by determining contact angle.**

(57) A method and related equipment are proposed for the quantitative determination of surfactant concentrations in aqueous solution. According to the present invention two cameras (1) record side views of a surfactant containing drop (4) from two angles arranged orthogonally with respect to each other. Contact angles are determined by fitting an ellipse to the contour of the droplet (4) and calculating the tangent at the intercept between the ellipse and the baseline, as defined by the solid support (10). The contact angles are directly related to the concentration of the surfactant in the droplet (4) and, through the use of a pre-calibrated reference curve for the surfactant in question, can be used to determine the surfactant concentration. An automated support cleaning and drop deposition mechanism provides for on-line surfactant measurement. The universality of the surface tension reduction by surfactants makes this method suitable for all kinds of surfactants.

FIG. 1

EP 1 729 109 A1

**Description**

The present invention generally relates to contact angle measuring devices and in particular to instruments for the measurement of contact angles between a drop of liquid and a solid surface. More particularly, this invention pertains to analytical methods for quantitatively determining the concentration of surfactants in aqueous solutions.

There are many applications in which the measurement of contact angles provides useful data. For example, contact angle measurements are often used to assess the properties of surfaces, such as the surface energy (Colloids and Surfaces A: Physicochemical and Engineering Aspects, 1996, 116, pp. 63-77). Additionally, one can determine surface tensions by analysing the shape characteristics of a sessile droplet, be it by the height and the diameter (WO 00/070324) or by the contact angle (DE 4302400).

Surfactants are of wide spread use in many diverse fields, such as inkjet printing, coating technologies, cosmetics, formulation of therapeutics, and formulation of crop protection agents. Their inherent ability to reduce the surface tension of a liquid is exploited to improve the spreading of liquids over all kinds of surfaces. In pharmacological research membrane proteins represent an important set of drug targets. Here, detergents are used to extract the membrane proteins from the cell membrane and bring them in solution. Subsequent detergent removal in the presence of lipids after purification yields incorporation of membrane proteins into lipid vesicles which then can be used for biochemical investigations. Hence it is important to know the surfactant concentration in solution.

Several methods exist for the determination of the surfactant concentration, such as the use of radioactively labelled surfactants (European Journal of Biochemistry, 1983, 129(3), pp. 525-532), quantitative thin-layer chromatography (US 4292041), and a modified phenol-sulphuric acid assay to measure sugar moieties of some detergents (Biochemistry, 1997, 36(19), pp. 5884-5892). Ringler and co-workers (in: Membrane Transport, Oxford University Press, New York, 2000, pp. 243-248) describe a method for assigning detergent concentrations either to the weight of a pendant drop detaching from a capillary tube or to the diameter of a sitting drop spreading over a Teflon film (Journal of Structural Biology, 1992, 109(3), pp. 219-234).

However, the aforementioned methods are complicated and slow, they require large sample volumes and some are costly, making them impractical for routine measurements.

The object of the present invention is to provide a fast, accurate and cost-effective method for the routine determination of surfactant concentrations in aqueous solutions by contact angle analysis.

This object is achieved by correlating the contact angle, formed between a liquid droplet containing a surfactant below its critical micellar concentration and a hydrophobic solid support, to the concentration of the surfactant in the droplet by comparison to calibrated standard curves for the said surfactant and support. Contact angles are determined from digitalized side views of the droplet, recorded by two orthogonally arranged cameras linked to a computer, by calculating the slope of the tangent going through the intercept between the baseline of the droplet and its contour fitted by an ellipse.

All surfactants have in common that they reduce the surface tension of any aqueous solution by partitioning to the air-water interface. This disturbs the ordered arrangement of water molecules at the surface and diminishes the force of attraction between them. The surface tension is steadily reduced upon increase of the surfactant concentration until the critical micellar concentration is reached, the concentration above which excess surfactant molecules start to form larger aggregates called micelles. Therefore, the concentration of free (monomeric) surfactant molecules in solution stays constant above the critical micellar concentration. The contact angle between a sitting drop and a solid support is defined by the Young's equation:

$$\cos\vartheta = ( \, \gamma_{sv} - \gamma_{sl} \, ) \, / \, \gamma_{lv}$$

where $\gamma_{sv}$, $\gamma_{sl}$ and $\gamma_{lv}$ are the interfacial tensions of the solid-vapour, solid-liquid and liquid-vapour interfaces respectively and $\vartheta$ is the Young contact angle. Thus the contact angle is related to the interfacial surface tensions and hence to the concentration of surfactants.

Advantageous to the present invention are the universal applicability to all surfactants, the speed and accuracy of the surfactant concentration measurement, the small solution volume required and the cost-effectiveness.

The present invention is further described hereinafter with reference to an embodiment in conjunction with the accompanying drawings, in which:

Fig. 1    shows a schematic top view drawing to scale of a possible setup of the contact angle measuring device,

Fig. 2    represents a side view of the sitting drop on the solid support,

Fig. 3    illustrates the image analysis procedure. (A) and (D) show the raw images after a threshold has been applied. (B) and (E) represent the extracted contours of (A) and (D) respectively. (C) and (F) display the software output after image processing. Note: In (C) the contour has been rotated by 90° with respect to (B),

Fig. 4    represents the calibration curves for common non-ionic, cationic, anionic and zwitterionic detergents used in membrane biochemistry, and

Fig.5    demonstrates the validity of the surfactant concentration determination by the present invention when compared to the method of scintillation counting of the corresponding radioactively labelled surfactant.

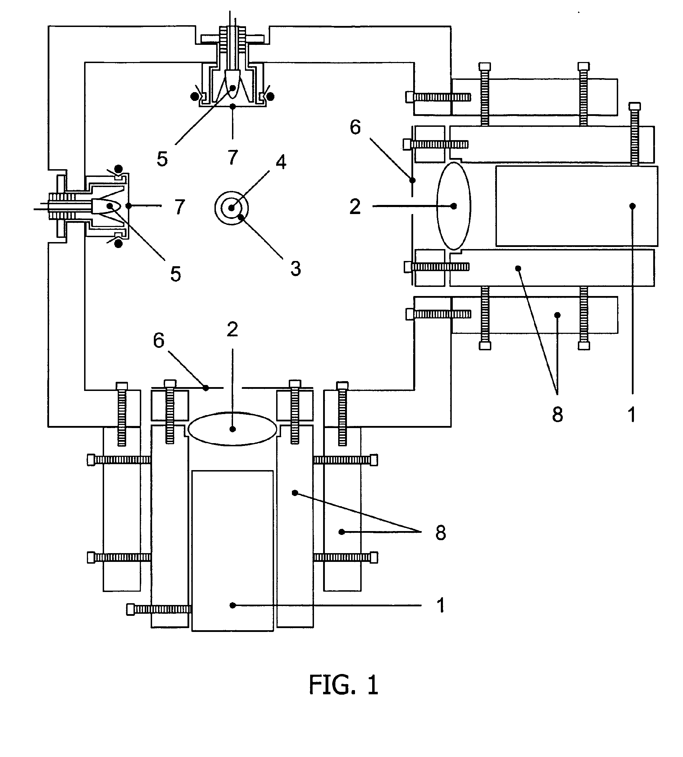

Fig. 1 shows the setup of the contact angle measuring device viewed from the top. Two C-MOS black and white camera modules 1 are held by camera alignment devices 8 including bi-convex lenses 2 to magnify the droplet and iris diaphragms 6 to improve the image contrast. The two cameras 1 acquire side views of the drop 4 from orthogonal directions to compensate for drop asymmetry. Two frame grabber cards control the image acquisition. To form a distinct silhouette for image processing two LED's 5 are mounted opposite to the cameras 1 and covered by Teflon tape 7 to achieve a diffuse illumination. At the intersection of the two camera axes a cylinder serves as support 3 for the solid support 10 which is fastened to it by double sided tape 9.

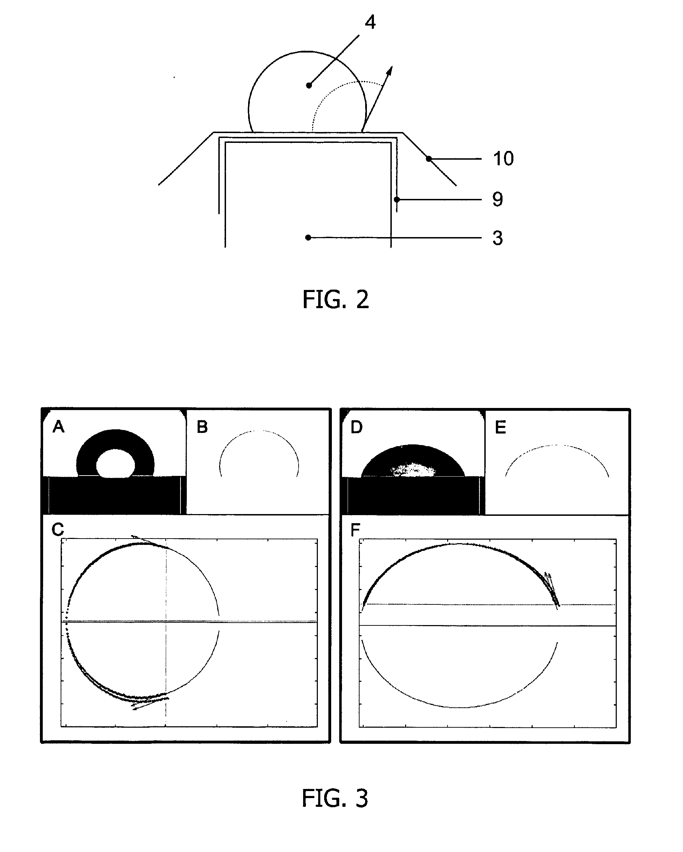

A droplet 4 of 20 microliter or less is manually deposited on the hydrophobic support 10 (Fig. 2). After a selected delay each camera 1 records three images, which are independently processed. This time lag ensures that the spreading of the droplet 4 has reached equilibrium. The image processing steps are documented for two typical drops in Fig. 3. The software analyses the raw drop images in three steps: First a threshold (Fig. 3 A and D) is applied to the raw image of the droplet. Second, the droplet is cut out according to a predefined frame including the baseline. The contour of the droplet (Fig. 3 B and E) is detected by the software and extracted to an xy-coordinates file and used to calculate the drop volume. Third, the contour is approximated analytically by an ellipse. Initial fit parameters such as the width and the height of the droplet are read out from the xy-coordinates file. If, based on the preliminary approximation values, the contact angle is expected to be larger than 90 degrees the contour will be treated as two independent halves to solve the ellipsoid equation. As a consequence angles larger than 90 degrees will have separate values for the left and the right contact angle (Fig. 3 C). The contact angles are obtained by calculating the ellipse tangent at the intersection with the baseline. At the end the mean angle and the volume are calculated and the results together with the contours of the droplet are plotted in a graph (Fig. 3 C and F). When contact angles determined from the orthogonal images differ more than a certain measure the values are not taken into account for the mean angle calculation, thereby ensuring that the droplet is sufficiently symmetric or that the image does not feature any artefacts or baseline uncertainty.

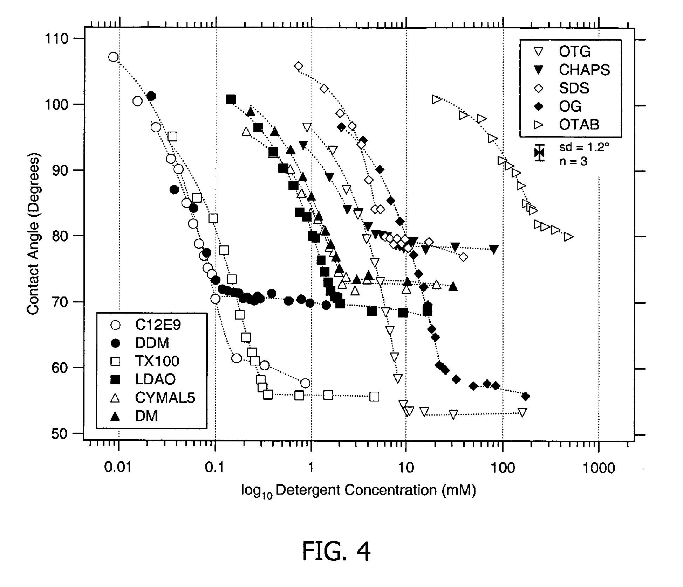

Calibration curves for all kinds of surfactants, including nonionic, cationic, anionic and zwitterionic, can be obtained by the measurement of contact angles of solutions with known surfactant concentrations. As can be seen from Fig. 4 all curves exhibit the same shape characteristics. The contact angle gradually decreases with increasing surfactant concentration until a plateau is reached with a sharp break. The critical micellar concentration is the concentration where the break occurs and after which there is no further significant reduction in the contact angle.

The surfactant concentration in a given sample of unknown surfactant concentration is assessed by diluting the said sample below the critical micellar concentration. Comparing the measured contact angle of the diluted solution to the calibration curve yields the surfactant concentration in the sample. It is noteworthy that the only interfering compounds are other additional surfactants present in the sample, other substances such as glycerol, which exhibit a lower surface tension than water, can already be included during the generation of the reference curve, thereby circumventing any interfering effects.

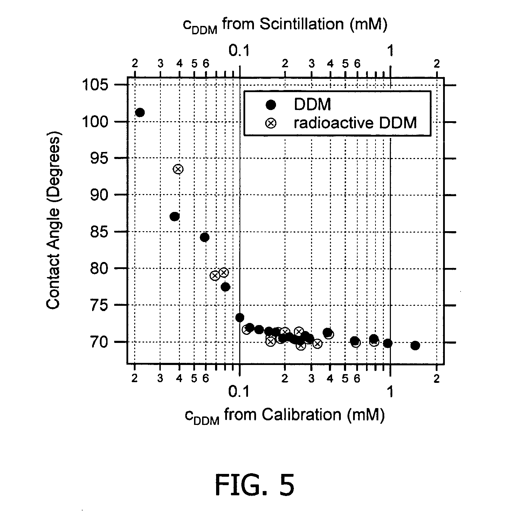

Fig. 5 demonstrates the accuracy of the present invention by comparing the reference curve for the detergent dodecyl-p,D-maltoside (DDM), where the concentrations are known from the preparation of the standard solutions, with the curve for a series of radioactively labelled [$^{14}$C]dodecyl-$\beta$,D-maltoside, where the concentrations have been determined by scintillation counting.

**Claims**

1.  Method for the quantitative determination of surfactant concentrations in aqueous solutions, **characterised in that** the contact angle formed between a surfactant containing sitting drop (4) and a solid support (10) is determined by digitalised image processing and compared to a pre-calibrated reference curve of the said surfactant for the determination of the concentration of the said surfactant in the said drop (4), sitting on the said support (10).

2.  Method according to claim 1, **characterised in that** the sitting drop (4) is deposited on a hydrophobic support (10).

3.  Method according to claim 1, **characterised in that** images of the droplet (4) are taken after an optimised time delay so that the spreading of the droplet (4) reaches equilibrium.

4.  Method according to claim 1, **characterised in that** a series of images is recorded to determine the optimal time delay for the spreading of the drop (4)

5.  Method according to claim 1, **characterised in that** the images are treated by means of computer supported digital image processing.

6.  Method according to claim 5, **characterised in that** a threshold is applied to the images so that an algorithm can identify the contour of the droplet (4).

7. Method according to claim 6,
   **characterised in that** the contour of the droplet (4) is analytically approximated by an ellipse.

8. Equipment for the measurement of contact angles of a liquid drop (4) sitting on a solid support (10), **characterised by** the use of two cameras (1) taking side views of the droplet (4) from two different horizontal viewing angles arranged orthogonally to each other but with the same vertical viewing angle.

9. Equipment according to claim 8,
   **characterised in that** the back illumination of the droplet is achieved by a LED (5) covered by Teflon tape (7) so that the light is evenly distributed over the viewing field of the cameras (1) and that the overall shape of the illumination setup exhibits a circular shape so that the reflections within the droplet (4) follow the contour of the droplet (4).

10. Equipment according to claim 8,
    **characterised by** an automated support cleaning and drop deposition mechanism for high-throughput or on-line detergent concentration measurements.

FIG. 1

5

FIG. 2

FIG. 3

FIG. 4

FIG. 5

**European Patent Office**

## EUROPEAN SEARCH REPORT

Application Number

EP 05 01 1904

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X<br>Y | US 2005/032341 A1 (KOEZUKA JUNICHI ET AL)<br>10 February 2005 (2005-02-10)<br>* claims 1-23 *<br>----- | 1<br><br>2-7,9,10 | G01N21/01 |
| X<br>Y | US 6 700 656 B1 (CHAO DAVID F ET AL)<br>2 March 2004 (2004-03-02)<br>* column 3 - column 5; figure 1 *<br>----- | 8<br><br>2-7,9,10 | |
| A | US 6 379 746 B1 (BIRCH WILLIAM ET AL)<br>30 April 2002 (2002-04-30)<br>* column 5 - column 16 *<br>----- | 1-7 | |
| A | US 2005/025880 A1 (MASUDA TAKASHI)<br>3 February 2005 (2005-02-03)<br>* column 9 - column 24 *<br>----- | 9,10 | |
| A | FR 2 861 170 A (GHARBI TIJANI; HUMBERT PHILIPPE) 22 April 2005 (2005-04-22)<br>* claims 1-7 *<br>----- | 8-10 | |
| A | US 2005/012894 A1 (KETELSON HOWARD ALLEN ET AL) 20 January 2005 (2005-01-20)<br>* claims 1-38 *<br>----- | 1-10 | TECHNICAL FIELDS SEARCHED (IPC) |
| A | US 2005/107254 A1 (OGINO TAKASHI ET AL)<br>19 May 2005 (2005-05-19)<br>* column 7 - column 19 *<br>----- | 1-7 | G01B<br>G01N |

The present search report has been drawn up for all claims

| Place of search | Date of completion of the search | Examiner |
|---|---|---|
| Berlin | 22 November 2005 | Dietrich, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 01 1904

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2005

| Patent document cited in search report | | | Publication date | Patent family member(s) | | Publication date |
|---|---|---|---|---|---|---|
| US 2005032341 | A1 | | 10-02-2005 | CN | 1581429 A | 16-02-2005 |
| US 6700656 | B1 | | 02-03-2004 | NONE | | |
| US 6379746 | B1 | | 30-04-2002 | CN | 1272465 A | 08-11-2000 |
| | | | | JP | 2000319038 A | 21-11-2000 |
| US 2005025880 | A1 | | 03-02-2005 | CN | 1575993 A | 09-02-2005 |
| FR 2861170 | A | | 22-04-2005 | WO | 2005038392 A2 | 28-04-2005 |
| US 2005012894 | A1 | | 20-01-2005 | NONE | | |
| US 2005107254 | A1 | | 19-05-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 00070324 A
- DE 4302400

- US 4292041 A

**Non-patent literature cited in the description**

- Colloids and Surfaces A. *Physicochemical and Engineering Aspects,* 1996, vol. 116, 63-77
- *European Journal of Biochemistry,* 1983, vol. 129 (3), 525-532

- *Biochemistry,* 1997, vol. 36 (19), 5884-5892
- *Membrane Transport,* 2000, 243-248
- *Journal of Structural Biology,* 1992, vol. 109 (3), 219-234